# EUROPEAN PATENT APPLICATION

(11) **EP 4 819 023 A1**
(43) Date of publication of application: **07.10.2026**
(21) Application number: 26170008.2
(22) Date of filing: 31.03.2026
(51) Int. Cl.: G06Q 50/06, G06Q 20/14, G06Q 20/28

(54) **A METHOD OF CONTROLLING A UTILITY SUPPLY PREPAYMENT UNIT AND A UTILITY SUPPLY PREPAYMENT UNIT**

(30) Priority: 02.04.2025 GB 202504963
(71) Applicant: Switch2 Energy Limited, Shipley West Yorkshire BD17 7EZ (GB)
(72) Inventor: Rutherford, Christopher, Shipley, BD17 7EZ (GB); Hirst, Jon, Shipley, BD17 7EZ (GB); Bystryakov, George, Shipley, BD17 7EZ (GB)
(74) Representative: HGF

(57) **Abstract**

A method of controlling a utility supply prepayment unit and a utility supply prepayment unit are provided. The method comprises: transmitting, using a processor of the utility supply prepayment unit, a query signal along a communication system connected to the utility supply prepayment unit; wherein the query signal is configured to interrogate at least one meter connected to the communication system, to determine whether the at least one meter corresponds to a particular utility category from a set of utility categories; receiving a response to the query signal, at the utility supply prepayment unit, from a responsive meter of the at least one meter, wherein the response indicates that the responsive meter corresponds to the particular utility category; storing information, in a memory of the utility supply prepayment unit, linking the responsive meter to the particular utility category; establishing a connection between the utility supply prepayment unit to the responsive meter to obtain measurements relating to the particular utility category from the responsive meter.

## Description

This invention relates to a method of controlling a utility supply prepayment unit and a utility supply prepayment unit. In particular it relates to a method of controlling a utility supply prepayment unit and a utility supply prepayment unit which can be used in district and community utility supply schemes.

### BACKGROUND

Utility supply is the supplying of energy to the public, and is typically provided by a utility company. It is known to provide utility supply prepayment units, also referred to as energy payment units, where a resident or other user pays for supply of utilities using the utility supply prepayment unit, which monitors utility usage and controls the supply of utilities to the property according to the amount the resident or user has paid for. This can also be referred to as pay-as-you-go, or prepayment, of utility supplies.

Historically, utility supply prepayment units have been configured to receive payment via coins, tokens, keys or prepayment cards. The disadvantage of these is that as the trend towards cashless societies and mobile payments continues, these types of prepayment units become more burdensome to use. Additionally there is less scope for utility providers to monitor these types of prepayment units and to provide enhanced data visibility, which can be a useful tool to assist in budgeting and managing energy consumption.

Whilst more modern utility supply prepayment units have started to appear, challenges remain in providing a utility supply prepayment unit which is easy to install, monitor, improves the payment process and provides great customer satisfaction through enhanced budgeting techniques and management of energy consumption.

Current utility supply prepayment units fall broadly into two categories - Full pay-as-you-go (PAYG) and Thin PAYG systems. For full PAYG systems, a digital wallet and the operational logic facilitating credit deduction resides in the equipment installed at properties, for example in a meter or a utility supply prepayment unit. This type of PAYG system is fully functional even when external connectivity to the system is interrupted, and in that way it has similarities to the coin/token/card/key operated energy meters used historically. This is also the principle of operation of the modern Smart Meters in the regulated electricity and gas supply market.

Thin PAYG systems dispense with the local digital wallet, operating logic and the local user interface. Instead this type of system relies on web-based facilities performing similar functions. With minimal hardware presence at properties, these systems cannot fulfil their purpose without external connectivity. They require the end user to access a web-based interface (a website or a mobile app) in order to check the status of their account, top up or monitor their energy consumption.

In general, full PAYG systems are perceived as more reliable, more capable of protecting the revenue of the PAYG system operator and more inclusive of properties/residents having limited or no internet access. However, full PAYG systems include a fairly complex custom electronic device with embedded software, and as a result they present a higher entry barrier to the utility supply market compared to thin PAYG systems which are generally available off-the-shelf.

### BRIEF SUMMARY OF THE DISCLOSURE

Aspects and examples of the invention provide a method of controlling a utility supply prepayment unit and a utility supply prepayment unit as claimed in the appended claims.

According to an aspect of the invention, there is provided a method of controlling a utility supply prepayment unit, comprising: transmitting, using a processor of the utility supply prepayment unit, a query signal along a communication system connected to the utility supply prepayment unit; wherein the query signal is configured to interrogate at least one meter connected to the communication system, to determine whether the at least one meter corresponds to a particular utility category from a set of utility categories; receiving a response to the query signal, at the utility supply prepayment unit, from a responsive meter of the at least one meter, wherein the response indicates that the responsive meter corresponds to the particular utility category; storing information, in a memory of the utility supply prepayment unit, linking the responsive meter to the particular utility category; establishing a connection between the utility supply prepayment unit to the responsive meter to obtain measurements relating to the particular utility category from the responsive meter.

Optionally, the set of utility categories comprise one or more of: electricity; heating; cooling; hot water; cold water; temperature; gas.

Optionally, the communication system comprises a Meter-Bus.

Optionally, the method additionally comprises: determining, using the processor of utility supply prepayment unit, that communication using the communication system has not been performed for a predetermined time period; powering down the communication system in response to determining that communication using the communication system has not been performed for the predetermined time period.

Optionally, the method additionally comprises: receiving a user request, at the utility supply prepayment unit, to make a payment for utility supply; generating, using the processor of the utility supply prepayment unit, a unique transaction request, wherein the unique transaction request is unique to the utility supply prepayment unit and the user request;
providing access for a user to pay the unique transaction request using the utility supply prepayment unit.

Optionally, providing access for the user to pay comprises enabling the user to pay the unique transaction request using a near field communication device of the utility supply prepayment unit; and/or wherein providing access for the user to pay comprises providing a QR code on the utility supply prepayment unit.

Optionally, the method additionally comprises: determining that payment has been made to fulfil the unique transaction request; determining whether the utility supply prepayment unit is connected to a cellular network, in response to determining that the utility supply prepayment unit is connected to a cellular network, routing the payment to the utility supply prepayment unit; adding credit to a digital wallet of the utility supply prepayment unit corresponding to the payment.

Optionally, the method additionally comprises: determining that payment has been made to fulfil the unique transaction request; determining whether the utility supply prepayment unit is connected to a cellular network, in response to determining that the utility supply prepayment unit is not connected to a cellular network, providing a payment token to the user; wherein the utility supply prepayment unit is configured to receive the payment token to add credit to a digital wallet of the utility supply prepayment unit corresponding to the payment.

Optionally, the method additionally comprises: requesting, at the utility supply prepayment unit, connection to a cellular network; receiving, at the utility supply prepayment unit, cellular network information; estimating, using historic installation data stored on memory of the utility supply prepayment unit and the cellular network information, a probability of successful connection to the cellular network; estimating, using the historic installation data and the cellular network information, a predicted time required to connect to the cellular network; providing, on a user interface associated with the utility supply prepayment unit, a recommended action for completing the connection to the cellular network, wherein the recommended action is based on the estimation of the probability of successful connection and the estimation of the predicted time required to connect; wherein the recommended action comprises one or more of: waiting for a predetermined period of time; performing a power cycle of the utility supply prepayment device; performing a reset of a SIM associated with the utility supply prepayment device.

Optionally, the method additionally comprises: receiving a budgeting request at the utility supply prepayment unit, wherein the budgeting request comprises a budget amount for a utility supply not to be exceeded during a budget period; determining whether or not a cost of providing the utility supply has met the budget amount during the budget period; inhibiting access to the utility supply if the budget amount has been met until the budget period ends or until the utility supply prepayment unit receives a manual override of the budgeting request.

Optionally, the method additionally comprises: receiving at the utility supply prepayment unit, an indication that one or more of the at least one meter have errored; in response to receiving the indication, delaying inhibiting of a utility supply associated with the utility supply prepayment unit for a predetermined delay period; inhibiting the utility supply after the predetermined delay period has expired.

Optionally, the method additionally comprises: receiving at the utility supply prepayment unit, an indication that the utility supply prepayment unit has errored; in response to receiving the indication, delaying inhibiting of a utility supply associated with the utility supply prepayment unit for a predetermined delay period; inhibiting the utility supply after the predetermined delay period has expired.

According to an aspect of the invention, there is provided a utility supply prepayment unit comprising a processor and memory, the processor configured to: transmit a query signal along a communication system connected to the utility supply prepayment unit; wherein the query signal is configured to interrogate at least one meter connected to the communication system, to determine whether the at least one meter corresponds to a particular utility category from a set of utility categories; receive a response to the query signal from a responsive meter of the at least one meter, wherein the response indicates that the responsive meter corresponds to the particular utility category; store information, in the memory, linking the responsive meter to the particular utility category; establish a connection with the responsive meter to obtain measurements relating to the particular utility category from the responsive meter.

Optionally, the set of utility categories comprise one or more of: electricity; heating; cooling; hot water; cold water; temperature; gas.

Optionally, the communication system comprises a Meter-Bus.

Optionally, the processor is additionally configured to: determine that communication using the communication system has not been performed for a predetermined time period; power down the communication system in response to determining that communication using the communication system has not been performed for the predetermined time period.

Optionally, the processor is additionally configured to: receive a user request, to make a payment for utility supply; generate a unique transaction request, wherein the unique transaction request is unique to the utility supply prepayment unit and the user request;
provide access for a user to pay the unique transaction request using the utility supply prepayment unit.

Optionally, the utility supply prepayment unit comprises a near field communication device; wherein providing access for the user to pay comprises enabling the user to pay the unique transaction request using the near field communication device.

Optionally, the utility supply prepayment unit comprises a Quick Response (QR) code, wherein providing access for the user to pay comprises providing the QR code on the utility supply prepayment unit.

Optionally, the utility supply prepayment unit additionally comprises a digital wallet, wherein the processor is additionally configured to: determine that payment has been made to fulfil the unique transaction request; determine whether the utility supply prepayment unit is connected to a cellular network, in response to determining that the utility supply prepayment unit is connected to a cellular network, route the payment to the utility supply prepayment unit; add credit to the digital wallet corresponding to the payment.

Optionally, the utility supply prepayment unit additionally comprises a digital wallet, wherein the processor is additionally configured to: determine that payment has been made to fulfil the unique transaction request; determine whether the utility supply prepayment unit is connected to a cellular network, in response to determining that the utility supply prepayment unit is not connected to a cellular network, provide a payment token to the user; wherein the utility supply prepayment unit is configured to receive the payment token to add credit to the digital wallet corresponding to the payment.

Optionally, the utility supply prepayment unit additionally comprises a user interface, wherein the processor is additionally configured to: request, at the utility supply prepayment unit, connection to a cellular network; receive, at the utility supply prepayment unit, cellular network information; estimate, using historic installation data stored on memory of the utility supply prepayment unit and the cellular network information, a probability of successful connection to the cellular network; estimate, using the historic installation data and the cellular network information, a predicted time required to connect to the cellular network; provide, on the user interface, a recommended action for completing the connection to the cellular network, wherein the recommended action is based on the estimation of the probability of successful connection and the estimation of the predicted time required to connect.

Optionally, the recommended action comprises one or more of: waiting for a predetermined period of time; performing a power cycle of the utility supply prepayment device; performing a reset of a SIM associated with the utility supply prepayment device.

Optionally, the processor is additionally configured to: receive a budgeting request, wherein the budgeting request comprises a budget amount for a utility supply not to be exceeded during a budget period; determine whether or not a cost of providing the utility supply has met the budget amount during the budget period;inhibit access to a utility supply if the budget amount has been met until the budget period ends or until the processor receives a manual override of the budgeting request.

Optionally, the processor is additionally configured to: receive an indication that one or more of the at least one meter have errored; in response to receiving the indication, delay inhibiting of a utility supply for a predetermined delay period; inhibit the utility supply after the predetermined delay period has expired; and/or wherein the processor is additionally configured to: receive an indication that the utility supply prepayment unit has errored; in response to receiving the indication, delay inhibiting of the utility supply for a predetermined delay period; inhibit the utility supply after the predetermined delay period has expired.

According to an aspect of the invention, there is provided a system comprising a utility supply prepayment unit as described herein, a communication system and at least one meter as described herein. Optionally the system additionally comprises one or more of the following as described herein: a cellular network; a web interface; a third-party; a service provider; a payment provider; an electronic device or mobile device; a utility supply.

According to an aspect of the invention, there is provided a method of controlling a utility supply prepayment unit, the method comprising: determining, using a processor of the utility supply prepayment unit, that communication using a communication system has not been performed for a predetermined time period; powering down the communication system in response to determining that communication using the communication system has not been performed for the predetermined time period.

According to an aspect of the invention, there is provided a method of controlling a utility supply prepayment unit, the method comprising: receiving a user request, at the utility supply prepayment unit, to make a payment for utility supply; generating, using a processor of the utility supply prepayment unit, a unique transaction request, wherein the unique transaction request is unique to the utility supply prepayment unit and the user request; providing access for a user to pay the unique transaction request using the utility supply prepayment unit.

According to an aspect of the invention, there is provided a method of controlling a utility supply prepayment unit, the method comprising: requesting, at the utility supply prepayment unit, connection to a cellular network; receiving, at the utility supply prepayment unit, cellular network information; estimating, using historic installation data stored on memory of the utility supply prepayment unit and the cellular network information, a probability of successful connection to the cellular network; estimating, using the historic installation data and the cellular network information, a predicted time required to connect to the cellular network; providing, on a user interface associated with the utility supply prepayment unit, a recommended action for completing the connection to the cellular network, wherein the recommended action is based on the estimation of the probability of successful connection and the estimation of the predicted time required to connect.

According to an aspect of the invention, there is provided a method of controlling a utility supply prepayment unit, the method comprising: receiving a budgeting request at the utility supply prepayment unit, wherein the budgeting request comprises a budget amount for a utility supply not to be exceeded during a budget period; determining whether or not a cost of providing the utility supply has met the budget amount during the budget period; inhibiting access to the utility supply if the budget amount has been met until the budget period ends or until the utility supply prepayment unit receives a manual override of the budgeting request.
According to an aspect of the invention, there is provided a method of controlling a utility supply prepayment unit, the method comprising: receiving at the utility supply prepayment unit, an indication that one or more of at least one meter have errored;
in response to receiving the indication, delaying inhibiting of a utility supply associated with the utility supply prepayment unit for a predetermined delay period; inhibiting the utility supply after the predetermined delay period has expired.

According to an aspect of the invention, there is provided a method of controlling a utility supply prepayment unit, the method comprising receiving at the utility supply prepayment unit, an indication that the utility supply prepayment unit has errored; in response to receiving the indication, delaying inhibiting of a utility supply associated with the utility supply prepayment unit for a predetermined delay period; inhibiting the utility supply after the predetermined delay period has expired.

### BRIEF DESCRIPTION OF THE DRAWINGS

Examples of the invention are further described hereinafter with reference to the accompanying drawings, in which:
Figure 1 is a schematic representation of a system including a utility supply prepayment unit according to examples of the invention;
Figure 2 is a schematic representation of a utility supply prepayment unit according to examples of the invention;
Figure 3 illustrates a method of controlling a utility supply prepayment unit according to examples of the invention;
Figure 4 illustrates a method of controlling a utility supply prepayment unit according to examples of the invention;
Figure 5 illustrates a method of controlling a utility supply prepayment unit according to examples of the invention;
Figure 6 illustrates a method of controlling a utility supply prepayment unit according to examples of the invention;
Figure 7 illustrates a method of controlling a utility supply prepayment unit according to examples of the invention;
Figure 8 illustrates a method of controlling a utility supply prepayment unit according to examples of the invention;
Figure 9 illustrates a method of controlling a utility supply prepayment unit according to examples of the invention; and
Figure 10 illustrates a method of controlling a utility supply prepayment unit according to examples of the invention.

### DETAILED DESCRIPTION

The utility supply prepayment unit according to examples disclosed herein combines energy metering, utility supply management, a communication gateway, a display to provide information to a resident or other user of the utility supply prepayment unit and payment functionality. All of this is provided in a single enclosed device, which is installed at a property. The utility supply prepayment unit provided according to examples disclosed herein can be referred to as a smart metering device, or energy payment unit.

The utility supply prepayment unit according to examples disclosed herein is typically to be used in district and community heating schemes. In these types of schemes, energy to heat each of the properties in the district or community is typically provided by hot water which is generated by a communal boiler, heat pump, or as a byproduct of a large industrial plant (waste incinerators etc.). It is to be understood that "property", as referred to throughout, refers to a single living space in a district or community scheme. For example a property may be a house, flat or apartment. A "resident" is referred to throughout, refers to a person living in or otherwise using the property. They may or may not be the account holder associated with the utility supply prepayment unit.

The utility supply prepayment unit comprises a digital wallet. Funds can be added to the digital wallet by the resident or anybody else who has access to the utility supply prepayment unit. This can include the utility supplier, otherwise referred to as an energy company or energy provider, where credit can be added to the digital wallet remotely via the network connection to the utility supply prepayment unit as described herein. The digital wallet may be associated with an account provided by the utility supplier, with a main account holder being a person associated with the account.

The utility supply prepayment unit collects and stores energy usage, or utility usage, and is configured to enable or disable supply of utilities depending on the balance of funds in the digital wallet. The utility supply prepayment unit may be configured to associate units of the various utilities with a per-unit cost and then deducts funds from the digital wallet as utilities are used according to the per-unit cost.

The utility supply prepayment unit is configured to manage several different types of utilities, which may be referred to as a set of utility categories. For example the set of utility categories may comprise one or more of electricity, heating, cooling, hot water, cold water, temperature, gas, photovoltaic supply, amongst others. It is to be understood that each category of utility supply corresponds to one or more variables which are measured and doesn't necessarily directly correspond to a unit of energy. For example electricity may be measured in kilowatt hours, which represents a unit of energy. Cold water may be measured in units of volume of water used and does not directly correspond to a unit of energy.

The utility supply prepayment unit according to examples comprises a display and is configured to display information relating to cost of utility supply, remaining credit, account history, amongst other functions. The utility supply prepayment unit may also be configured to provide environmental monitoring capability, for the purpose of improving energy efficiency and maintenance of housing stock.

Although typically used in a district or community heating scheme, it is to be understood that the potential use of the utility supply prepayment unit according to examples is not limited in this regard and may be installed and used in other scenarios.

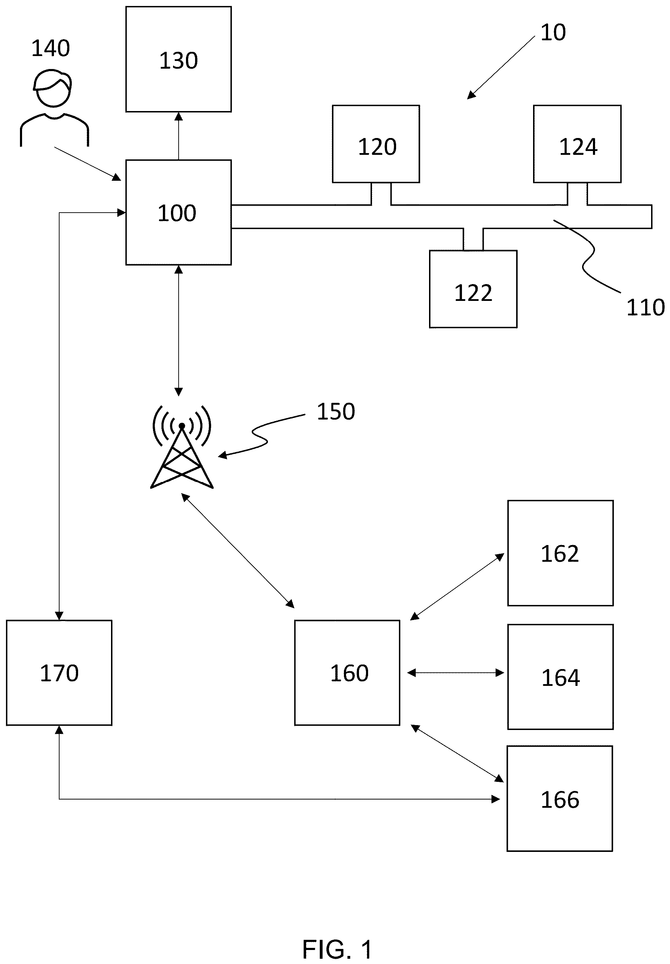

To monitor the supply of utilities, the utility supply prepayment unit is connected to at least one meter. Reference will now be made to Figure 1, which illustrates how the utility supply prepayment unit is connected to the at least one meter, as well as the other connections and functionalities linked to the utility supply prepayment unit.

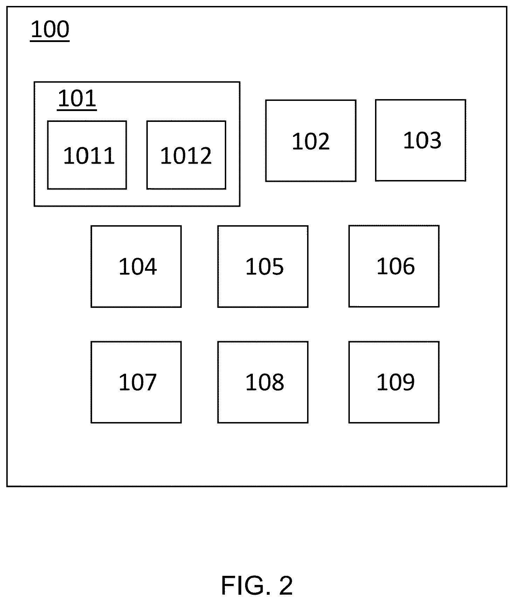

In particular, Figure 1 is a schematic representation of a system 10 including a utility supply prepayment unit 100 according to examples of the invention. Figure 2 is also referenced below in relation to Figure 1. Figure 2 is a schematic representation of a utility supply prepayment unit according to examples of the invention.

The utility supply prepayment unit 100 in Figure 1 is connected to a communication system 110. The communication system 110 may comprise a Meter-Bus, or M-Bus, which is a known European standard for the remote reading of utility supply meters. It is envisaged that other communication protocols may be used as the communication system 110 besides the meter-bus. In examples where the communication system 110 comprises a M-Bus, in order to communicate with the utility supply prepayment unit, utility supply meters connected to the M-Bus comprise a wired M-Bus interface which enables the utility supply prepayment unit 100 to obtain meter readings and additional supply data digitally. M-Bus interfaces are commonly used in heat meters, and allows several meters to be communicated with by the utility supply prepayment unit 100 through a single pair of wires.

As shown in Figure 1, a first meter 120, a second meter 122 and a third meter 124 are connected to the communication system 110. The communication system 110 is configured to provide signals from the utility supply prepayment unit 100 to each of the first meter 120, second meter 122 and third meter 124. The communication system 110 is also configured to provide readings and other signals from each of the first meter 120, second meter 122 and third meter 124 to the utility supply prepayment unit 100. The utility supply prepayment unit 100 is configured to connect to the communication system 110 via a communication system connection 104, which may be referred to as a M-Bus connection 104 in some examples.

The at least one meter, which in Figure 1 comprises first meter 120, second meter 122 and third meter 124, may conform to the relevant UK Measuring Instruments Regulations derived from the EU MID (Measuring Instruments) directive. Several meters may be connected to the utility supply prepayment unit 100 simultaneously via the communication system 110, and in other examples any number of meters can be connected to the utility supply prepayment unit 100.

As shown in Figure 1, the utility supply prepayment unit 100 is connected to a utility supply 130, which can also be referred to as an energy supply 130. The utility supply prepayment unit 100 is configured to control the supply of energy provided by the utility supply 130. In particular, the utility supply prepayment unit 100 is configured to control supply of energy to the associated property by enabling or disabling its control output. The output may either comprise a switched live signal or a volt-free mode.

A control signal from a utility supply connection 109 of the utility supply prepayment unit 100 to the utility supply 130 may be configured to operate one or more of: prepayment valves; heat interface unit (HIU) PAYG enable input; or external electrical contactors, in order to control delivery of energy into domestic loads. The state of these control devices is binary, in other words on or off, and so the energy delivery is either enabled to the full capacity of the circuit or disabled entirely. The main mode of supply control is accomplished through computer program instructions comprising prepayment logic, stored on memory 1012 of the utility supply prepayment unit 100, which disables supply when the credit in the digital wallet 102 of the utility supply prepayment unit 100 is exhausted.

According to examples, the utility supply prepayment unit 100 may be operated according to a thin PAYG regime by switching the utility supply prepayment unit 100 to credit billing mode and forcing its control outputs to open and close with commands supplied through an external communication interface 160 as described herein.

As shown in Figure 1, a user or resident 140 can interact with the utility supply prepayment unit 100. For example a user interface of the utility supply prepayment unit 100 may enable a user to view utility costs, current consumption, digital wallet 102 balance as well as providing a process for enabling payment as described herein.

Different types of users 140 can interact with the utility supply prepayment unit from its installation, during normal use and maintenance.

For example, one type of user 140 may be a commissioning engineer, or installer. Installers or commissioning engineers fit the utility supply prepayment unit 100 to an end user's or resident's property. The utility supply prepayment unit 100 is configured to store step-by-step on-screen installation guidance for the benefit of the installer on its memory 1012, and display the guidance via a display 106 of the utility supply prepayment unit 100, and is also configured to provide real time monitoring of the utility supply prepayment unit 100 status. Additionally, the utility supply prepayment unit 100 may comprise local communication ports 108 as shown in Figure 2, which can be used if further diagnostic information is required during setup.

During normal use, the utility supply prepayment unit 100 provides a local gateway for the resident 140 or other end user 140 benefitting from a district or community heat network. While the primary account holder or their representative is most likely to use the unit's web-based interfaces as described herein, an in-home display 106 provided with the unit 100 allows all residents 140 or end users 140 to participate in monitoring of the energy consumption and household budgeting. Local top-up of funds in the digital wallet 102 can be facilitated by a resident 140 or a visitor 140 (another type of end user 140) even in the absence of the main account holder.

Another type of user 140 may be system support operators 140. The metering and data collection infrastructure of the system 10 needs to be maintained in working order, for billing to be accurate and timely. System support operators 140 can investigate and rectify any issues that prevent the normal operation. They may initially perform remote diagnostics, in order to decide whether a site visit to the property with the utility supply prepayment unit 100 is necessary or if remote intervention is going to be sufficient. Repairs may include reinstating external or internal connections, or hardware replacement and re-commissioning of different components of the system 10.

Utility supply providers, otherwise known as energy providers or energy billing services, may be another type of user 140, although their access to the utility supply prepayment unit 100 is predominantly or exclusively carried out remotely, for example via the cellular network 150 and external communication interface 160 as described herein. Energy billing services are the main beneficiary of the metering data provided by the utility supply prepayment unit 100. They rely on the accurate and timely meter reads in order to produce bills that reflect the actual energy consumption. Energy billing services may receive, store and process the energy consumption data provided by the utility supply prepayment unit 100 via the cellular network 150 and external communication interface 160 as described herein.

As shown in Figure 1, the utility supply prepayment unit 100 is configured to connect to a cellular network 150, to connect the utility supply prepayment unit 100 to an external communication interface 160 as shown in Figure 1. The utility supply prepayment unit 100 may be configured to communicate with the cellular network 150 via LTE, or 5G loT communication protocols, although it is envisaged that the utility supply prepayment unit 100 may connect to the cellular network 150 with older communication protocols or future communication protocols. In other examples, the utility supply prepayment unit 100 may connect to a Wi-Fi or other internet network to enable access to the utility supply prepayment unit 100 via an external communication interface 160.

To connect to the cellular network 150, the utility supply prepayment unit 100 may comprise cellular network communication means 107, as shown in Figure 2.

The utility supply prepayment unit 100 is configured to enable its operation to be controlled and monitored through the external communication interface 160.

The external communication interface 160 may comprise a web interface, and additionally or alternatively it may comprise an application programming interface (API). The external communication interface 160 may also comprise web callbacks. Web callbacks may comprise asynchronous, out-of-band requests that a web interface will send to another service and/or device and/or program in response to certain events. The external communication interface 160 enables control and monitoring capability, for example through the web interface and/or API and/or web callbacks, to service providers and third-party metering and billing services, such as utility supply providers and mobile payment providers.

For example, as shown in Figure 1, the external communication interface 160 may be configured to enable connection to: a third-party 162, for example a utility supply provider; a service provider 164; a payment provider 166.

According to examples, the service provider 164 is the responsible party for providing the system 10 in particular the installation and maintenance of the utility supply prepayment unit 100. The service provider 164 may be enabled access via the external communication interface 160 to an entire fleet of utility supply prepayment units 100. In contrast, the third-party 162 may be responsible for providing the utility supply to the property and is responsible for billing of the utility supply, and may only have access to utility supply prepayment units 100 which are associated with their service, for example via a subscription or account. The payment provider 166 may be an application or a responsible party which enables payment to the digital wallet 102 of the utility supply prepayment unit 100, for example via a user's electronic device 170, or via a top-up payment system (for example in a store), or other payment means.

The web interface of the external communication interface 160 provides an online database and cache which mirrors the state of utility supply prepayment units 100 connected to the web interface, with low latency, where messages from any utility supply prepayment units 100 ensure 'near real time' state synchronisation when online. The API of the external communication interface 160 according to examples enables interaction with the cache database and a time series database, which offers a means of remote configuration management, firmware revision control and historic data retrieval for the whole fleet of utility supply prepayment units 100.

According to examples the utility supply prepayment units 100 are configured to provide messages which are structured using a well-known JSON format, which is human readable, easy to document and interpret. This enables a straightforward way for authorised parties or providers not currently set up with the system 10 to connect to and use the system 10 by providing open protocol communications. The utility supply prepayment units 100 messages are secured in transit with MQTTS (Message Querying TelemetryTransport Secured) and TLS (Transport Layer Security) mutual authentication. External HTTPS (Hypertext Transfer Protocol Secure) interaction with the API is secured with TLS and an API key, and also uses JSON data encoding.

As shown in Figure 1, a mobile device 170 or other electronic device 170 is shown. The mobile device 170 is configured to interact with the utility supply prepayment unit 100 to enable a mobile payment to be completed, as illustrated by the arrows connecting the mobile device 170 to the utility supply prepayment unit 100 and payment provider 166. For example, the utility supply prepayment unit 100 may be configured to initiate a payment locally. This is accomplished with initiation of pre-arranged remote payment through the display of the utility supply prepayment unit 100, or using a Near Field Communication (NFC) device 103 of the utility supply prepayment unit 100, or with a Quick Response (QR) code associated with the utility supply prepayment unit 100 which is configured to redirect the user to a payment collection facility on their own mobile device 170 or other electronic device 170. The payment may be verified by the utility supply prepayment unit 100 signalling the requested payment via the external communication interface 160 to the payment provider 166. In this way the payment provider 166 can verify and match the payment request from the mobile device 170 to the utility supply prepayment unit 100 and its associated digital wallet 102.

According to examples, the utility supply prepayment unit 100 and the system are configured to support remote top-ups facilitated by back-office infrastructure, website or a mobile app, which may involve one or more of the web interface, third-party 162, service provider 164 and payment provider 166.

According to examples, top-up of funds of the digital wallet 102 associated with the utility supply prepayment unit 100 can be completed even if the use of external communication interface 160 is impaired. A top-up code, generated in the payment transaction, can be entered into the display 106 of the utility supply prepayment unit 100 and converted into digital wallet credit immediately.

Referring further to Figure 2 in more detail, according to examples, the utility supply prepayment unit 100 comprises at least one processor 1011 and at least one memory 1012, which together form a computing device 101 of the utility supply prepayment unit 100.

The at least one processor 1011 may comprise one or more electronic processing device which operably executes computer-readable instructions. The at least one memory 1012 may be one or more memory device. The one or more memory device is electrically coupled to the one or more electronic processing device. The one or more memory device is configured to store instructions, and the one or more processing device is configured to access the one or more memory device and execute the instructions stored thereon. For example, the one or more memory device means may store instructions for providing any of the methods for controlling the utility supply prepayment unit 100 as described herein, or other control processes described herein.

As shown in Figure 2, the utility supply prepayment unit 100 comprises a digital wallet 102, configured to store a balance of a utility supply account associated with the utility supply prepayment unit 100. According to examples, the digital wallet 102 is stored in the memory 1012 of the utility supply prepayment unit 100, and is only shown separately to the memory 1012 in Figure 2 for illustration purposes.

The digital wallet 102 may be configured to be topped up, locally at the unit 100 or remotely. Once operational, the credit is deducted based on the ongoing energy consumption as determined by metering, current energy tariffs and periodic standing charges. When all credit options are exhausted, and if it is appropriate to disconnect, energy supply is stopped automatically by adjusting the control signal provided by the utility supply connection 109 to the utility supply 130. A top-up or another credit adjustment is then required for the utility supply 130 to be reinstated.

The utility supply prepayment unit 100 can also operate in a credit billing mode where the digital wallet 102, credit deductions and control output management logic stored in the memory 1012 is disabled.

Additionally as shown in Figure 2, the utility supply prepayment unit 100 comprises a Near Field Communications (NFC) device 103. The NFC device 103 of the utility supply prepayment unit 100 is configured to communicate with NFC devices of mobile device 170 or electronic device 170, to enable a requested payment to be made.

Figure 2 also shows the communication system connection 104 of the utility supply prepayment unit 100, which may be referred to as a M-Bus connection 104 in some examples. As described herein, the communication system connection 104 is configured to connect to the communication system 110 to enable communication with at least one meter as described herein. According to examples the communication system connection 104 comprises a wired connection. In other examples, the communication system connection 104 may be a wireless connection, in examples where the communication system 104 is carried out via wireless protocols.

Figure 2 also shows utility supply prepayment unit 100 comprises a Quick Response (QR) code. In some examples the QR code 105 is provided on a casing of the utility supply prepayment unit 100. Additionally or alternatively, the QR code 105 may be provided separately to the utility supply prepayment unit 100 but is associated with the utility supply prepayment unit 100. As described herein, the QR code 105 enables payment to the digital wallet 102 via capturing the QR code 105 using a camera of the mobile device 170 or electronic device 170. As the QR code 105 provides a unique reference to the utility supply prepayment unit 100, this enables the mobile device 170 to make payment via the payment provider 166 by identifying the utility supply prepayment unit 100.

As shown in Figure 2 and described herein, the utility supply prepayment unit 100 comprises a display 106. The display 106 is configured to display information on energy consumption, costs, remaining credit and account history. The display may comprise a LCD display. The choice of displayed data may be performed by the user 140 interacting with a touch panel and touch sensitive buttons of the display 106.

The display 106 may be configured to show the end user 140 the payment methods they can use, how deductions are calculated, and contact information if they need further help or to report a fault.

As shown in Figure 2, the utility supply prepayment unit 100 additionally comprises cellular network communication means 107. The cellular network communication means 107 can comprise any appropriate devices or components for connecting to the cellular network 150. For example the cellular network communication means 107 may comprise one or more of a cellular network transceiver, a Subscriber Identity Module (SIM) card or eSIM. In other examples instead of or in addition to the cellular network communication means 107, the utility supply prepayment unit 100 can comprise other network communication means. For example the other network communication means may comprise a Wi-Fi transceiver or other connection means for connecting to an internet network.

As shown in Figure 2, the utility supply prepayment unit 100 also comprises local communication ports 108.

The local communication ports 108 may comprise a wired Modbus interface which provides an alternative way to control and monitor the utility supply prepayment unit 100. The Modbus interface may be used as part of a Building Management System (BMS) to control and monitor multiple utility supply prepayment units 100 or a standalone utility supply prepayment unit 100, without the need for a cellular network 150, external communication interface 160, and may be managed independently from the service provider 164. The Modbus interface may also support connection of energy meters that exclusively support Modbus interface, which are more common in electricity meters.

The local communication ports 108 may comprise a USB port allowing service engineers 140 to use a wide range of handheld devices to interact with the utility supply prepayment unit 100.

As shown in Figure 2, the utility supply prepayment unit 100 also comprises a utility supply connection 109 as described herein. According to examples the utility supply connection 109 is a wired connection, and in other examples as a wireless connection.

According to examples, utility supply prepayment unit 100 may comprise an environmental monitoring service which enables the ambient temperature and humidity level to be monitored and communicated through the external communication interface 160. To achieve this, according to examples the utility supply prepayment unit 100 may comprise at least one of a temperature sensor and humidity sensor which are not shown in Figure 2.

According to examples, the utility supply prepayment unit 100 may be configured, through computer program instructions stored in the memory device 1012 and executed using the processing device 1011, to monitor its own operating environment and performance level, in order to ensure correct operation of the associated metering and billing service. Parameters monitored include power supply voltages, instances of power loss and software reboot, connections to and disconnections from any external communication interface 160, tamper detection circuits, user interactions etc..

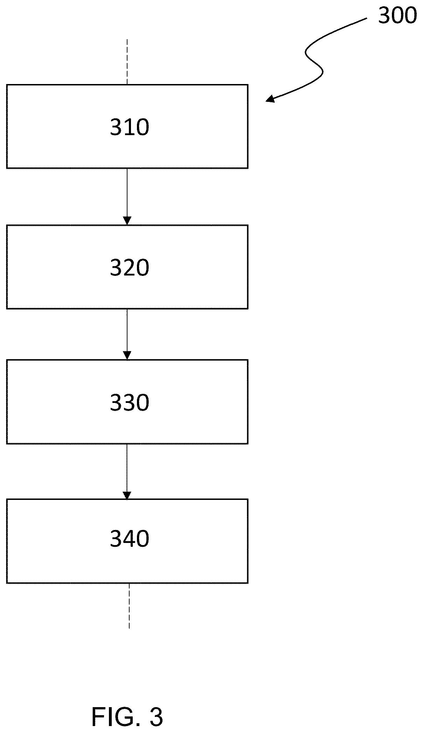

Figures 3 to 10 illustrate methods of controlling a utility supply prepayment unit 100 according to examples of the invention. In particular, instructions for carrying out any of the methods described herein with reference to Figures 3 to 10 may be stored in the at least one memory 1012 and may be executed by the at least one processor 1011. Each of the methods described in Figures 3 to 10 may be performed in isolation, that is without requiring the steps of any of the other methods disclosed in Figures 3 to 10 to be performed before or subsequently to the method in question. In other examples, one or more of the methods described in Figures 3 to 10 may be performed in conjunction with one another. The dashed lines at the top and bottom of each method shown in Figures 3 to 10 illustrate the option for other methods described herein and shown in the other Figures to be performed subsequently or before the method illustrated.

Figure 3 illustrates a method 300 of controlling a utility supply prepayment unit 100 according to examples of the invention.

The method 300 comprises transmitting 310, using the processor 1011 of the utility supply prepayment unit 100, a query signal along the communication system 110 connected to the utility supply prepayment unit 100. The query signal is configured to interrogate at least one meter connected to the communication system 110, to determine whether the at least one meter corresponds to a particular utility category from a set of utility categories as described herein. For example, the at least one meter can comprise any one or more of the first meter 120, the second meter 122, the third meter 124 and in other examples may include other meters.

The method 300 additionally comprises receiving 320 a response to the query signal, at the utility supply prepayment unit 100, from a responsive meter of the at least one meter. The response indicates that the responsive meter corresponds to the particular utility category.

The method 300 also comprises storing 330 information, in the memory 1012 of the utility supply prepayment unit 100, linking the responsive meter to the particular utility category. The method also comprises establishing 340 a connection between the utility supply prepayment unit 100 to the responsive meter to obtain measurements relating to the particular utility category from the responsive meter.

According to examples, the set of utility categories comprise one or more of: electricity; heating; cooling; hot water; cold water; temperature; gas. In other examples, the set of utility categories may alternatively or additionally comprise photovoltaic supply, waste water, amongst others. In some examples, hot water and cold water are not utility categories, and instead water is a utility category. According to examples, the communication system 110 of method 300 comprises a Meter-Bus as described herein.

The steps of method 300 may be repeated for querying different particular utility categories. For example, the steps of method 300 may be repeated for each of water, heating and electricity being the particular utility category in each iteration of the method 300.

Prior to the transmitting 310 step, the method may comprise the following additional steps: after a power cycle, or a software restart, of the utility supply prepayment unit 100, transmitting at least one reset signal along the communication system 110 to each of the at least one meter, which causes each of the at least one meter to reset. For example, the utility supply prepayment unit 100 may send ten reset signals with one second gaps between them. This gives each of the at least one meter time to prepare for further communication, for example to send readings to the utility supply prepayment unit 100.

Prior to the steps of method 300 shown in Figure 3, the method 300 may additionally comprise using configuration settings for one or more special meters. In particular, the one or more special meters may be uncommon or for some other reason be difficult to manage using the steps of method 300 shown in Figure 3. The utility supply prepayment unit 100 may therefore enable a third-party 162 or service provider 164 to add configuration settings for the one or more special meters. The configuration settings may comprise settings for fetching readings from the one or more special meters. The method may also comprise storing in the memory 1012 of the utility supply prepayment unit 100 data regarding any meters that respond to the configuration settings.

According to examples, each utility category may be associated with one or more types of devices. For example, the utility category of heating may be associated with one or more types of devices of: a heat meter, a heat inlet meter and a heat cost allocator meter. The utility category of cold water may be associated with one or more types of devices comprising: a water meter and a cold water meter. The utility category of hot water may be associated with one or more types of devices comprising: a water meter and a domestic hot water meter. The utility category of gas may be associated with one or more types of devices comprising: a gas meter, a gas data logger meter, a gas converter meter. The utility category of waste water may be associated with one or more types of devices comprising: a waste water meter, an irrigation water meter, a water data logger meter.

The query signal, which is configured to interrogate at least one meter connected to the communication system 110, may be configured to determine whether the at least one meter corresponds to a particular utility category from a first subset of utility categories of the set of utility categories. For example, the first subset of utility categories may comprise the utility categories which are expected to be frequently used with the utility supply prepayment unit 100, which may for example, comprise heat, water and electricity. In addition to determining whether the at least one meter corresponds to a particular utility category from the first subset, the query signal may be limited to one or more particular types of device for each utility category. For example, the query signal may limit the search for heat to just heat meters and heat inlet meters, and not heat cost allocator meters.

In addition to the steps shown in Figure 3, the method 300 may additionally comprise sending one or more address queries along the communication system 110, where the address query is configured to determine whether an address of the communication system 110 is associated with the at least one meter connected to the communication system 110. The one or more address queries may be limited to a subset of addresses of the total addresses possible for the communication system 110. For example, M-Bus comprises addresses 0-250. The one or more address queries may be limited to the addresses 0-10. Addresses 0-10 may be addresses which are normally used with the utility supply prepayment unit 100. Address 0 may be the default address for any meter when it is manufactured, so at this address the utility supply prepayment unit 100 may be enabled to find any new meter which is at its default settings, for example when is connected "straight out of the box". In other examples, the one or more address queries comprises all possible addresses, which for M-Bus is 0-250. In response to any meter responding to the address query, the utility supply prepayment unit 100 is configured to store the address as corresponding to that meter in its memory 1012, and can use it to form a connection with the meter and obtain readings from it.

In addition to the steps shown in Figure 3, the method 300 may additionally comprise transmitting an auxiliary query signal configured to interrogate at least one meter connected to the communication system 110. The auxiliary query signal may be configured to determine whether the at least one meter corresponds to a particular utility category from a second subset of utility categories of the set of utility categories. For example, the second subset of utility categories may comprise the utility categories which are expected to be less frequently used with the utility supply prepayment unit 100, which may for example, comprise waste water and gas.

In addition to determining whether the at least one meter corresponds to a particular utility category from the second subset, the query signal may be limited to one or more particular types of device for each utility category. This may be useful particularly if the second subset comprises utility categories which are also present in the first subset. For example, the utility category of heat may be present in both the first subset and the second subset, but for different types of devices. For example the auxiliary query signal may limit the search for heat to just heat cost allocator meters, and not heat meters or heat inlet meters. Method 300 can therefore comprise steps in which less frequently meters are found according to their utility category. The auxiliary query signal is typically sent after the one or more address queries.

According to examples, the utility supply prepayment unit 100 may be configured to repeat the steps of method 300, including the steps shown in Figure 3 and the additional steps described herein (except for power cycling or restarting the utility supply prepayment unit 100) several times, in case any meters failed to respond during the first iteration of the method 300. For example, a meter may sleep for several minutes to conserve its battery so it might be asleep on the first iteration of the method 300. And, as mentioned above, the method 300 may be repeated for different utility categories. According to examples, the steps of method 300 may be repeated three times, where each repeat searches for all of the different particular utility categories which are being required to search for. Following the three repeats, the utility supply prepayment unit 100 may be configured to stop any running of the method 300 for discovery of meters for 24 hours. Following the 24 hours, the method 300 may be repeated to repeat the process of discovering meters. According to examples, the repeat is not scheduled at a set time of day. Instead, it will be 24 hours after the power cycle, software restart, or when a service engineer started a scan for meters.

This daily discovery of meters advantageously will find any changes in the communication system 110 and meters connected to it, and can help to diagnose meters that have occasional faults.

Advantageously, the method 300 provides a method of controlling a utility supply prepayment unit 100 to find meters quickly through finding the meters by their utility category.

In many installations of the system 10, the utility supply prepayment unit 100 may be connected to one or two meters and discovery of these meters can therefore be carried out using method 300 without needing any configuration in the utility supply prepayment unit 100 or changes in the meters.

Following the method 300, according to which meters have been found using the query signal, the address queries and the auxiliary query signal, the utility supply prepayment unit 100 knows which utility categories and/or addresses to request for readings, and if a particular utility category wasn't found or a particular address doesn't have a meter associated with it, the utility supply prepayment unit 100 knows not to query those categories or addresses, which therefore provides an efficient process for taking readings from meters. The utility supply prepayment unit 100 may then query known meters for readings according to a predetermined time period. For example, the utility supply prepayment unit 100 may query meters every 5 minutes. As an example, if a heat meter is connected it will reply with a packet that contains the current readings of energy, volume, flow temperature, return temperature, etc. Then the utility supply prepayment unit 100 may store these readings and/or transfer them to the external communication interface 160 and then continues to collect readings from it every 5 minutes. But if there is no heat meter connected the utility supply prepayment unit 100 knows not to collect readings for that kind of utility category and/or device type.

From the perspective of a meter, the discovery process of method 300 will probably find the meter by its utility category, for example heat, electricity, water, or some other category. If the meter has an unusual device type or utility category then it will be found using the one or more address queries and/or the auxiliary query signal.

In many scenarios, when two meters are connected to the utility supply prepayment unit 100 via the communication system 110, they are usually different utility categories. For example, a heat meter and a water meter.

However in some scenarios, two meters of the same utility category may be connected. A common scenario may be when two water meters are connected, one measuring the cold water supply and the other measuring the hot. In this scenario, the set of utility categories only comprises water, and doesn't comprise separate categories for hot and cold water.

In this case when method 300 sends a query signal corresponding to water as the utility category, both water meters will be responsive, and their answers will mix together on the communication system 110, and without mitigating this there would be no way to recognise or decode the answers. This is referred to as a collision.

Following the query signal, according to method 300 one or more address queries may be transmitted along the communication system 100. If both water meters have the same address there will be another collision. This can happen when both meters are new, fresh out of the box. When meters are manufactured they typically have their address set to 0. Two new water meters will have the same device type, utility category and the same address, so the discovery process cannot tell them apart.

To solve this issue, according to examples the address of one of the meters is changed to use a different primary address, for example address 1. Now, when method 300 sends a query signal for water as utility category, it will still see a collision on the bus. But when it tries address 0 and then address 1 it will receive separate answers from the meters and it can then read them successfully.

The display 106 and the utility supply prepayment unit 100 may be configured to provide several different pages of a user interface that show the progress of method 300, in other words meter discovery. A user 140 can view the latest readings from each meter that has been discovered on one or more pages of the user interface.

For example, a page of the user interface may show the details of a discovered meter such as the device type and serial number, along with the latest reading collected from the meter.

The user interface may also comprise one or more pages for service engineers 140, which may be hidden by a password or other authentication means.

For example, a meter settings page of the user interface may show the meters that have been discovered, the serial number of each meter, and the latest reading. The utility supply prepayment unit 100 may wait a few minutes before collecting the next reading from a meter, so this page shows how old each reading is.

A status line of the meter setting pages may show the progress of discovery of meters according to method 300. The result of each attempt of the discovery process of method 300 (i.e. each iteration) is shown in this line, and when the next attempt starts it replaces the content of the line. An icon to see further historical information of the progress may be provided on the page. Each attempt by the method 300 appears as a line on this page. The lines scroll as the method progresses through utility categories, device types and addresses. The newest line is at the top of the page and the oldest at the bottom.

A scan button may also be provided in the one or more pages for the service engineers 140. Pressing this button instructs the utility supply prepayment unit 100 to begin method 300. If the utility supply prepayment unit 100 is in the middle of an iteration of method 300 then pressing the scan button restarts the method 300 from the beginning. If an iteration of method 300 has already run and finished then pressing the scan button starts a new iteration of the method 300 immediately.

The web interface of the external communication interface 160 may be configured to display meters discovered by a particular utility supply prepayment unit 100 and their status. A meter shown on the web interface can be selected to view details discovered during the method 300. The system 10 therefore provides information both at a local level on the utility supply prepayment unit 100 to users 140 and service engineers 140, as well as the web interface level to improve data accessibility.

According to the examples, the query signal is configured to interrogate the at least one meter connected to the communication system 110 to determine whether exactly one meter corresponds to the particulalr utility category. In other words, the method 300 attempts to find a single meter for each particular utility category it searches for. The unit 100 may then not search for that particular utilty category again using a query signal until the unit 100 is reset or it detects the meter linked to the particular utility category is no longer connected to the communicaiton system 110.

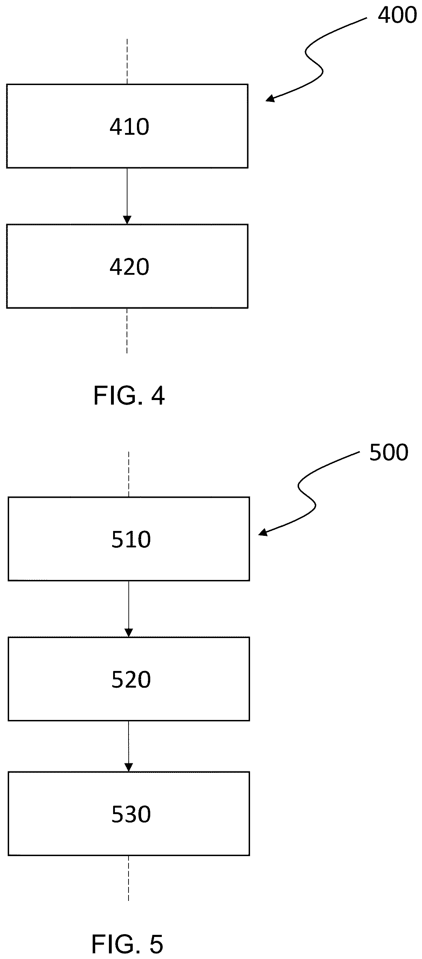

Figure 4 illustrates a method 400 of controlling a utility supply prepayment unit 100 according to examples of the invention. As described herein, method 400 can be performed separately to method 300 and the other methods described herein, or can be performed in combination with method 300 or the other methods described herein.

With reference to Figure 4, method 400 comprises: determining 410, using the processor 1011 of the utility supply prepayment unit 100, that communication using the communication system 110 has not been performed for a predetermined time period; powering down 420 the communication system 110 in response to determining that communication using the communication system 110 has not been performed for the predetermined time period. The predetermined time period may be set at any appropriate amount of time and may be tuned in the program instructions stored on the memory 1012. For example, the predetermined time period may be ten seconds but there is no particular limit on what the time period can be.

Alternatively, instead of waiting for a predetermined time period, the method 400 may comprise determining using the processor 1011 that one or more processes of a set of processes has been completed, and powering down the communication system 110 in response to determining that one or more of the set of processes has been completed. For example, one of the processes may comprise obtaining meter readings from the at least one meter. One of the processes may comprise determining that the steps of method 300 have been completed, or that the steps of method 300 have been completed a certain number of times and/or for certain different utility categories.

Powering down the communication system 110, such as an M-Bus, is advantageous since whilst the M-Bus is active it doubles the power used by the utility supply prepayment unit 100. To reduce its energy use and running costs the utility supply prepayment unit 100 powers down the M-Bus by turning off the voltage to the M-Bus when it is not needed. This means the voltage may be powered on for about eight minutes while the method 300 runs, and then it may be powered on for about thirty seconds every five minutes when it collects readings from the meters.

The rest of the time the utility supply prepayment unit 100 does not supply a voltage to the M-Bus. If the voltage needs to be checked the Meter Settings page can be used by a service engineer to start a scan, and then the voltage will be on for about eight minutes.

According to examples, the utility supply prepayment unit 100 may comprise a configuration setting that turns on the communication system 110, (for example M-Bus) voltage and prevents it from powering down. This setting is not needed for most of the meters that are used with the utility supply prepayment unit 100, because the meters typically have backup batteries that keep them running for years without needing external power. But a few models of meters need voltage applied all the time to keep them operating, and to support these models a network operator (e.g. a service provider 164) can turn on the configuration setting.

Figure 5 illustrates a method 500 of controlling a utility supply prepayment unit 100 according to examples of the invention. As described herein, method 500 can be performed separately to methods 300 and 400 and the other methods described herein, or can be performed in combination with methods 300 and 400 or the other methods described herein.

According to Figure 5, method 500 comprises: receiving 510 a user request, at the utility supply prepayment unit 100, to make a payment for utility supply; generating 520, using a processor 1011 of the utility supply prepayment unit 100, a unique transaction request, wherein the unique transaction request is unique to the utility supply prepayment unit 100 and the user request; providing 530 access for a user 140 to pay the unique transaction request using the utility supply prepayment unit.

According to examples, providing 530 access for the user 140 to pay comprises enabling the user to pay the unique transaction request using the near field communication (NFC) device 103 of the utility supply prepayment unit 100.

According to examples, providing 530 access for the user 140 to pay comprises providing a quick response (QR) code 105 on the utility supply prepayment unit 100 or providing a QR code 105 associated with the utility supply prepayment unit 100.

As described herein, providing the user 140 with the capability to pay using an electronic device 170 using the NFC device 103 or QR code 105 enables payment local to the utility supply prepayment unit 100 and with ease using an electronic device 170, instead of requiring use of a web interface and logging into an account, or going to a separate location to pay fortop-up. Additionally, as the payment is linked to the utility supply prepayment unit 100, the payment does not need to be made by the account holder, providing better flexibility for payment of utility supply in rental situations or other situations where the main account holder is not present.

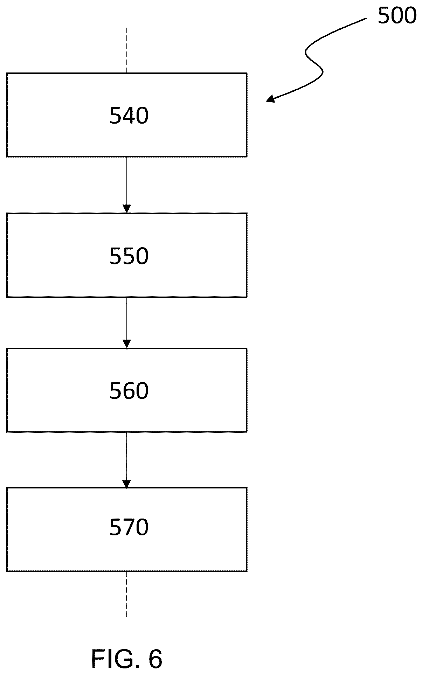

Figure 6 illustrates a method 500 of controlling a utility supply prepayment unit 100 according to examples of the invention. In particular, Figure 6 shows optional additional steps of method 500 in addition to what is shown in Figure 5.

According to Figure 6, the method 500 may additionally comprise: determining 540 that payment has been made to fulfil the unique transaction request; determining 550 whether the utility supply prepayment unit 100 is connected to the cellular network 150. In response to determining that the utility supply prepayment unit 100 is connected to the cellular network 150, the method comprises routing 560 the payment to the utility supply prepayment unit 100 and adding credit 570 to the digital wallet 102 of the utility supply prepayment unit 100 corresponding to the payment.

Therefore according to examples, if the utility supply prepayment unit 100 is connected to the cellular network 150, the payment completed on the electronic device 170 can be added as credit to the digital wallet 102, completing the process of enabling local top-up at the utility supply prepayment unit 100.

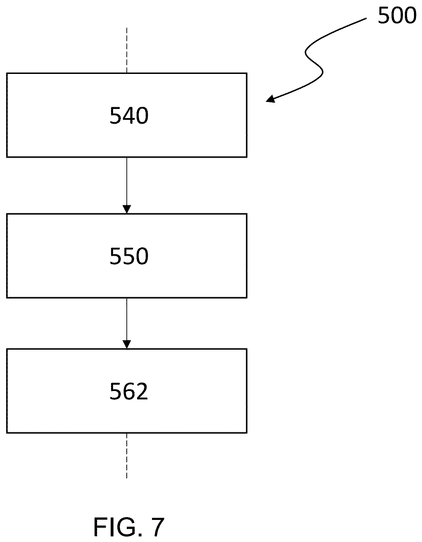

Figure 7 illustrates a method 500 of controlling a utility supply prepayment unit 100 according to examples of the invention. In particular, Figure 7 shows optional additional steps of method 500 in addition to what is shown in Figure 5.

According to Figure 7, the method 500 additionally comprises: determining 540 that payment has been made to fulfil the unique transaction request; determining 550 whether the utility supply prepayment unit 100 is connected to cellular network 150. So far these are the same steps shown in Figure 6.

Figure 7 differs from Figure 6 in that in response to determining that the utility supply prepayment unit 100 is not connected to the cellular network 150, the method 500 comprises providing 562 a payment token to the user 140. For example, the payment token can be provided as a number or code on the electronic device 170.

The utility supply prepayment unit 100 is configured to receive the payment token to add credit to the digital wallet 102 of the utility supply prepayment unit 100 corresponding to the payment. For example, the user 140 can enter the token into a user interface on the display 106 of the utility supply prepayment unit 100.

Therefore advantageously local payment at the utility supply prepayment unit 100 can be completed regardless of the connectivity status of the utility supply prepayment unit 100, which is advantageous for utility supply prepayment units 100 installed in low connectivity areas and improves the end user 140 experience.

Additionally, method 500 may additionally comprise verifying that if the same payment is received both via a token and the cellular network 150 that only one instance of the payment is added to the digital wallet 102.

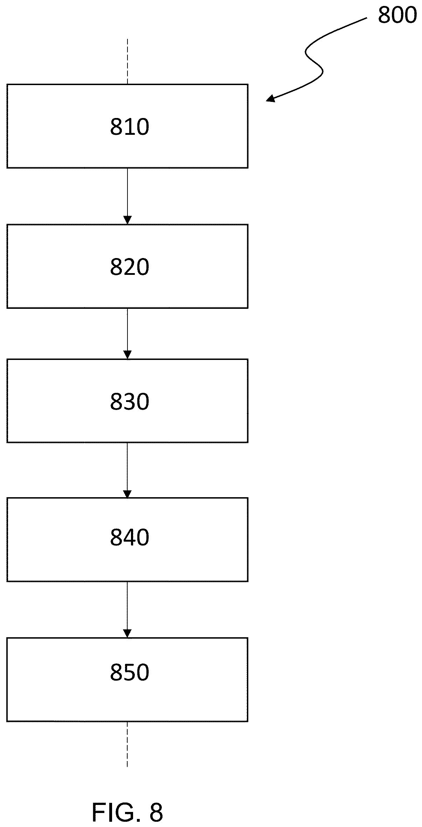

Figure 8 illustrates a method 800 of controlling a utility supply prepayment unit 100 according to examples of the invention. As described herein, method 800 can be performed separately to methods 300, 400 and 500 and the other methods described herein, or can be performed in combination with methods 300, 400 and 500 or the other methods described herein.

According to Figure 8, method 800 comprises requesting 810, at the utility supply prepayment unit 100, connection to a cellular network 150; receiving 820, at the utility supply prepayment unit 100, cellular network information. For example, the cellular network information can comprise base station information, network type, data speeds, etc..

The method 800 additionally comprises estimating 830, using historic installation data stored on memory 1012 of the utility supply prepayment unit 100 and the cellular network information, a probability of successful connection to the cellular network 150; estimating 840, using the historic installation data and the cellular network information, a predicted time required to connect to the cellular network 150; providing 850, on a user interface (for example on display 106) associated with the utility supply prepayment unit 100, a recommended action for completing the connection to the cellular network 150. The recommend action is based on the estimation of the probability of successful connection and the estimation of the predicted time required to connect. To provide the estimation of the probability of successful connection and the estimation of the predicted time, one or more prediction models may be used, which use historic installation data and in some examples have been trained using training data comprising examples which detail cellular network information and whether successful connection was made and the time it took to connect.

The recommend action may comprise one or more of: waiting for a predetermined period of time; performing a power cycle of the utility supply prepayment device; performing a reset of a SIM associated with the utility supply prepayment device. Waiting for a predetermined period of time can be to wait for a period of minutes or hours, or may even suggest for the engineer 140 or installer 140 to leave the utility supply prepayment unit 100 and return much later, i.e. the next day.

The action of waiting a predetermined period of time may be based on determining that a high probability of successful connection exists, but that the predicted time for connection is relatively large. In some examples, performing the power cycle or resetting the SIM may be recommended if the probability of successful connection is low. Values for when different actions are recommended can be fine tuned depending on service provider 164 preference and service engineer consultation.

Method 800 therefore enables a service engineer or installer, or similar user to more effectively plan the installation process, providing information which can enable them to complete other tasks and have increased confidence on whether the utility supply prepayment unit 100 is going to successfully connect to the network 150. Method 800 may be carried out, for example, prior to method 500, but the invention is not limited in this regard and different orders of the method are possible. For example, the method 800 may be carried out after the utility supply prepayment unit 100 has been installed for a period of time and the cellular network 150 connection is being updated or changed.

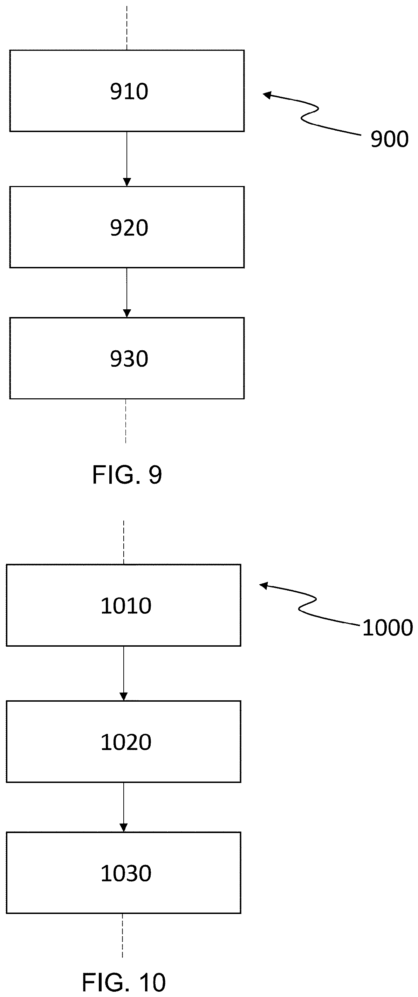

Figure 9 illustrates a method 900 of controlling a utility supply prepayment unit 100 according to examples of the invention. As described herein, method 900 can be performed separately to methods 300, 400, 500 and 800 and the other methods described herein, or can be performed in combination with methods 300, 400, 500 and 800 or the other methods described herein.

According to Figure 9, method 900 comprises: receiving 910 a budgeting request at the utility supply prepayment unit 100, wherein the budgeting request comprises a budget amount for utility supply not be exceeded during a budget period; determining 920 whether or not a cost of providing the utility supply 130 has met the budget amount during the budget period; inhibiting 930 access to the utility supply 130 if the budget amount has been met until the budget period ends or until the utility supply prepayment unit 100 receives a manual override of the budgeting request. For example, the inhibiting 930 comprises disconnecting from the utility supply 130 as described herein.

Method 900 is beneficial as some users 140 desire to keep their energy expenditure strictly within a set budget. Method 900 advantageously provides a process for guaranteeing that the fixed budget is met.

Figure 10 illustrates a method 1000 of controlling a utility supply prepayment unit 100 according to examples of the invention. As described herein, method 1000 can be performed separately to methods 300, 400, 500, 800 and 900 and the other methods described herein, or can be performed in combination with methods 300, 400, 500, 800 and 900 or the other methods described herein.

According to Figure 10, method 1000 comprises: receiving 1010 at the utility supply prepayment unit 100, an indication that one or more of the at least one meter have errored; in response to receiving the indication, delaying 1020 inhibiting of the utility supply 130 for a predetermined delay period; and inhibiting 1030 the utility supply 130 after the predetermined delay period has expired. Temporary meter/equipment malfunction can lead to an interruption in utility supply, but providing method 1000 prevents interruption for a period of time in the event that the malfunction is temporary. This prevents short interruptions in supply. The delay period may be set by the service provider 164 or engineer 140 according to data on temporary malfunctions of different types of meters.

The method 1000 may additionally or alternatively comprise receiving an indication, at the utility supply prepayment unit 100 (for example at its processor 1011)that the utility supply prepayment unit 100 has errored; in response to receiving the indication, delaying 1020 inhibiting of the utility supply 130 for a predetermined delay period; and inhibiting 1030 the utility supply 130 after the predetermined delay period has expired. This again prevents short interruptions in supply in the event of unit fault. The delay period may be set by the service provider 164 or engineer 140 according to data on temporary malfunctions of the utility supply prepayment unit 100.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method of controlling a utility supply prepayment unit, comprising:
transmitting, using a processor of the utility supply prepayment unit, a query signal along a communication system connected to the utility supply prepayment unit;
wherein the query signal is configured to interrogate at least one meter connected to the communication system, to determine whether the at least one meter corresponds to a particular utility category from a set of utility categories;
receiving a response to the query signal, at the utility supply prepayment unit, from a responsive meter of the at least one meter, wherein the response indicates that the responsive meter corresponds to the particular utility category;
storing information, in a memory of the utility supply prepayment unit, linking the responsive meter to the particular utility category;
establishing a connection between the utility supply prepayment unit to the responsive meter to obtain measurements relating to the particular utility category from the responsive meter.

2. A method as claimed in claim 1, wherein the set of utility categories comprise one or more of:
electricity;
heating;
cooling;
hot water;
cold water;
temperature;
gas.

3. A method as claimed in any preceding claim, wherein the method additionally comprises:
determining, using the processor of utility supply prepayment unit, that communication using the communication system has not been performed for a predetermined time period;
powering down the communication system in response to determining that communication using the communication system has not been performed for the predetermined time period.

4. A method as claimed in any preceding claim, additionally comprising:
receiving a user request, at the utility supply prepayment unit, to make a payment for utility supply;
generating, using the processor of the utility supply prepayment unit, a unique transaction request, wherein the unique transaction request is unique to the utility supply prepayment unit and the user request;
providing access for a user to pay the unique transaction request using the utility supply prepayment unit; optionally wherein providing access for the user to pay comprises enabling the user to pay the unique transaction request using a near field communication device of the utility supply prepayment unit; and/or optionally
wherein providing access for the user to pay comprises providing a QR code on the utility supply prepayment unit.

5. A method as claimed in claimed in claim 4, wherein the method additionally comprises:
determining that payment has been made to fulfil the unique transaction request;
determining whether the utility supply prepayment unit is connected to a cellular network;
in response to determining that the utility supply prepayment unit is connected to a cellular network, routing the payment to the utility supply prepayment unit;
adding credit to a digital wallet of the utility supply prepayment unit corresponding to the payment; or wherein the method additionally comprises:
determining that payment has been made to fulfil the unique transaction request;
determining whether the utility supply prepayment unit is connected to a cellular network;
in response to determining that the utility supply prepayment unit is not connected to a cellular network, providing a payment token to the user;
wherein the utility supply prepayment unit is configured to receive the payment token to add credit to a digital wallet of the utility supply prepayment unit corresponding to the payment.

6. A method as claimed in any preceding claim, additionally comprising:
requesting, at the utility supply prepayment unit, connection to a cellular network;
receiving, at the utility supply prepayment unit, cellular network information;
estimating, using historic installation data stored on memory of the utility supply prepayment unit and the cellular network information, a probability of successful connection to the cellular network;
estimating, using the historic installation data and the cellular network information, a predicted time required to connect to the cellular network;
providing, on a user interface associated with the utility supply prepayment unit, a recommended action for completing the connection to the cellular network, wherein the recommended action is based on the estimation of the probability of successful connection and the estimation of the predicted time required to connect;
wherein the recommended action comprises one or more of:
waiting for a predetermined period of time;
performing a power cycle of the utility supply prepayment device;
performing a reset of a Subscriber Identity Module (SIM) associated with the utility supply prepayment device.

7. A method as claimed in any preceding claim, additionally comprising:
receiving a budgeting request at the utility supply prepayment unit, wherein the budgeting request comprises a budget amount for a utility supply not to be exceeded during a budget period;
determining whether or not a cost of providing the utility supply has met the budget amount during the budget period;
inhibiting access to the utility supply if the budget amount has been met until the budget period ends or until the utility supply prepayment unit receives a manual override of the budgeting request.

8. A method as claimed in any preceding claim, comprising
receiving at the utility supply prepayment unit, an indication that one or more of the at least one meter have errored;
in response to receiving the indication, delaying inhibiting of a utility supply associated with the utility supply prepayment unit for a predetermined delay period;
inhibiting the utility supply after the predetermined delay period has expired.

9. A method as claimed in any preceding claim, comprising:
receiving at the utility supply prepayment unit, an indication that the utility supply prepayment unit has errored;
in response to receiving the indication, delaying inhibiting of a utility supply associated with the utility supply prepayment unit for a predetermined delay period;
inhibiting the utility supply after the predetermined delay period has expired.

10. A utility supply prepayment unit comprising a processor and memory, the processor configured to:
transmit a query signal along a communication system connected to the utility supply prepayment unit;
wherein the query signal is configured to interrogate at least one meter connected to the communication system, to determine whether the at least one meter corresponds to a particular utility category from a set of utility categories;
receive a response to the query signal from a responsive meter of the at least one meter, wherein the response indicates that the responsive meter corresponds to the particular utility category;
store information, in the memory, linking the responsive meter to the particular utility category;
establish a connection with the responsive meter to obtain measurements relating to the particular utility category from the responsive meter.

11. A utility supply prepayment unit as claimed in claim 10, wherein the communication system comprises a Meter-Bus.

12. A utility supply prepayment unit as claimed in any of claims 10 to 11, wherein the processor is additionally configured to:
determine that communication using the communication system has not been performed for a predetermined time period;
power down the communication system in response to determining that communication using the communication system has not been performed for the predetermined time period.

13. A utility supply prepayment unit as claimed in any of claims 10 to 12, wherein the processor is additionally configured to:
receive a user request, to make a payment for utility supply;
generate a unique transaction request, wherein the unique transaction request is unique to the utility supply prepayment unit and the user request;
provide access for a user to pay the unique transaction request using the utility supply prepayment unit;
optionally wherein the utility supply prepayment unit comprises a near field communication device;
optionally wherein providing access for the user to pay comprises enabling the user to pay the unique transaction request using the near field communication device;
optionally wherein the utility supply prepayment unit comprises a Quick Response (QR) code, wherein providing access for the user to pay comprises providing the QR code on the utility supply prepayment unit.

14. A utility supply prepayment unit as claimed in claim 13, wherein the utility supply prepayment unit additionally comprises a digital wallet, wherein the processor is additionally configured to:
determine that payment has been made to fulfil the unique transaction request;
determine whether the utility supply prepayment unit is connected to a cellular network;
in response to determining that the utility supply prepayment unit is connected to a cellular network, route the payment to the utility supply prepayment unit;
add credit to the digital wallet corresponding to the payment; or
wherein the utility supply prepayment unit additionally comprises a digital wallet, wherein the processor is additionally configured to:
determine that payment has been made to fulfil the unique transaction request;
determine whether the utility supply prepayment unit is connected to a cellular network;
in response to determining that the utility supply prepayment unit is not connected to a cellular network, provide a payment token to the user;
wherein the utility supply prepayment unit is configured to receive the payment token to add credit to the digital wallet corresponding to the payment.

15. A utility supply prepayment unit as claimed in any of claims 10 to 14, wherein the utility supply prepayment unit additionally comprises a user interface, wherein the processor is additionally configured to:
request, at the utility supply prepayment unit, connection to a cellular network;
receive, at the utility supply prepayment unit, cellular network information;
estimate, using historic installation data stored on memory of the utility supply prepayment unit and the cellular network information, a probability of successful connection to the cellular network;
estimate, using the historic installation data and the cellular network information, a predicted time required to connect to the cellular network;
provide, on the user interface, a recommended action for completing the connection to the cellular network, wherein the recommended action is based on the estimation of the probability of successful connection and the estimation of the predicted time required to connect;
wherein the recommended action comprises one or more of:
waiting for a predetermined period of time;
performing a power cycle of the utility supply prepayment device;
performing a reset of a Subscriber Identity Module (SIM) associated with the utility supply prepayment device.
